# EUROPEAN PATENT APPLICATION

(11) **EP 1 617 354 A1**
(43) Date of publication of application: **18.01.2006**
(21) Application number: 04291851.6
(22) Date of filing: 13.07.2004
(51) Int. Cl.: G06K 19/077

(54) **Double-sided chip card module with single-side testing capabilities**

(71) Applicant: Axalto SA, 92120 Montrouge (FR)
(72) Inventor: Nerot, Dorothée, c/o Axalto SA, 92120 Montrouge (FR); Reignoux, Yves, c/o Axalto SA, 92120 Montrouge (FR); Brel, Marie-Cécile, c/o Axalto SA, 92120 Montrouge (FR); Groeninck, Denis, c/o Axalto SA, 92120 Montrouge (FR); Deloche, Manuel, c/o Axalto SA, 92120 Montrouge (FR); Thevenot, Benoît, c/o Axalto SA, 92120 Montrouge (FR)

(57) **Abstract**

The chip card module, when in an intermediate condition, comprises: a double-sided dielectric layer (10) with conductive patterns formed on both sides; a chip (12) supported on the backside (14) of said dielectric layer; first contact pads (20) arranged on the frontside (16) of said dielectric layer; and second contact pads (24) arranged on the backside (14) of said dielectric layer. The chip (12) and first (20) and second (24) contact pads are located within a peripheral cutout line (22) adapted to define the outer shape of the module in a further manufacturing condition after punching the dielectric layer along said line. A plurality of via holes (30) are formed through the dielectric layer at respective hole locations arranged beyond the cutout line, along with corresponding test pads (26) each formed on the frontside (16) so as to extend over a respective via hole and connected to a respective first contact pad (20). This enables simultaneous electrical access from the backside (14), in particular for test probes (32, 34), both i) directly to the second contact pads (24) and ii) indirectly to the first contact pads (20) by way of the test pads (26) being accessed at the bottom of the via holes (30).

## Description

### BACKGROUND OF THE INVENTION

### Field of the invention

The present invention generally relates to the manufacturing of chip cards, in particular the manufacturing and testing of chip modules before embedding them into card bodies.

### Background art

More specifically, the chip modules are conventionally manufactured from a carrier band provided with chips mounted thereon in a row at regular intervals. The carrier band comprises a flexible dielectric layer combined to a conductive layer forming a "leadframe" or metallic grid defining contact pads to which respective terminals of the chip are connected by techniques such as TAB (Tape Automated Bonding) or wire-bond. Once the connections between the contact pads and the chip are made, the whole chip and connection wires are coated in a protective resin which is then hardened or cross-linked.

After suitable electrical tests, the individual modules are pressed out from the carrier band, then embedded in a plastic card body, typically by gluing the module to the card body by means of a liquid adhesive or by fusing a hot-melt adhesive.

The present invention is particularly concerned with the electrical tests which have to be performed before individualising the modules out of the carrier band.

In particular, in certain applications the module includes electrical contacts located on both its sides, namely on the frontside and also the backside of the module (in the following description, "frontside" shall refer to the side of the module which will remain apparent once the module is incorporated in the card body, viz. the side which bears the contacts enabling exchange of signals with the chip from the outside of the card, whereas "backside" shall refer to the side of the module which will be hidden once the module is incorporated in the card body, viz. the side on which the chip has been mounted).

This is in particular the case with so-called "multi-function IC cards" such as cards enabling exchange of signals either by means of the contacts of the module or by contactless exchange of signals, typically by means of inductive coupling between a RF terminal and an antenna built in the module. In such a card, connection pads to the antenna are typically provided on the backside of the module so that for testing the module before embedding it, electrical tests should be performed with respect to contacts and/or test pads located on the frontside as well as on the backside of the module.

Usually, such test is conducted in successive steps of (i) electrical testing from the frontside, then (ii) flipping the module in order to turn it upside down, then (iii) electrical testing from the backside (or *vice versa* by exchanging steps (i) and (iii)). This solution is of course time, hence money, consuming.

Another solution involves modifying a testing machine in order to provide it with two testing heads (front and back), enabling all testing operations to be performed at once. However this leads to important changes in the design of the machine.

A further drawback encountered in testing machines is that every time a testing operation is performed, a scratch appears on the electrical testing area due to the physical contact with the testing probe, which scratch remains visible if this area corresponds to the contacts that will remain visible to the user of the card as a final product.

### SUMMARY OF THE INVENTION

It is therefore an object of the invention to provide a double-sided chip card module that enables full electrical testing of all chip functionalities at once, only from one side of the module, without any need of any flipping operation or providing the testing machine with both front and back testing heads.

A further object of invention is to reduce the time needed for electrical testing of the chip modules before cutting them out of the carrier band and embedding them in the card body, hence correspondingly reducing the manufacturing costs and increasing production throughput.

Another object of the invention is to provide a chip module design which obviates the formation of scratches on testing areas corresponding to contacts visible to the user of the end-product.

The invention is applicable to double sided-chip card modules as mentioned above, which modules more specifically comprise: a double-sided dielectric layer with a frontside and a backside, said dielectric layer having conductive patterns formed on both sides; a chip supported on the backside of said dielectric layer; first contact pads arranged on the frontside of said dielectric layer; and second contact pads arranged on the backside of said dielectric layer. The chip and the first and second contact pads are located within a module peripheral cutout line adapted to define the outer shape of the module in a further manufacturing condition after punching the dielectric layer along said cutout line.

In a first embodiment, the chip card module further includes a plurality of via holes formed through the dielectric layer at respective hole locations arranged beyond said peripheral cutout line, and a corresponding plurality of test pads each formed on the frontside of the dielectric layer so as to extend over a respective via hole and connected to a respective first contact pad by an electrical link.

Such an arrangement provides simultaneous electrical access from the backside, in particular for test probes, both i) directly to the second contact pads and ii) indirectly to the first contact pads by way of the test pads being accessed at the bottom of the via holes.

In a variant of said first embodiment, the plurality of test pads is formed on the backside of the dielectric layer so as to extend over a respective via hole and being connected to a respective second contact pad by an electrical link.

Such an arrangement provides simultaneous electrical access from the frontside both i) directly to the first contact pads and ii) indirectly to the second contact pads by way of the test pads being accessed at the bottom of the via holes.

A second embodiment according to the invention makes use of existing bonding holes formed at the periphery of the chip and receiving a wire-bond electrical connection from the first contact pads to respective terminals of the chip, said bonding holes being located within the above-mentioned module peripheral cutout line. According to the invention, there are provided a plurality of test pads each formed on the backside of the dielectric layer, and a corresponding plurality of intermediate pads each formed on the backside of the dielectric layer and connected, on the one hand, to a respective test pad by an electrical link, and, on the other hand, to a respective first contact pad by way of an additional wire-bond electrical connection received by the respective bonding hole.

Such an arrangement provides simultaneous electrical access from the backside, in particular for test probes, both i) directly to the second contact pads and ii) indirectly to the first contact pads by way of the test pads.

### BRIEF DESCRIPTION OF THE DRAWINGS

The foregoing and other objects, aspects and advantages of the invention will be better understood from the following detailed description of a preferred embodiment of the invention with reference to the appended drawings, in which the same numerals refer to identical or functionally similar features over the different figures.
Figure 1 is a plan view of the contact area of a chip module according to a first embodiment of the invention, viewed along line I-I of Figure 2.
Figure 2 is a side elevation cutaway of the module according to the first embodiment of the invention.
Figure 3 is a plan view of the backside of the module of Figure 2, viewed along line III-III of Figure 2.
Figure 4 illustrates the step of testing the module of Figure 2.
Figure 5 is a view of the backside of a module according to a second embodiment of the invention, viewed along line V-V of Figure 6.
Figure 6 is a side elevation cutaway of the module according to the second embodiment of the invention, illustrating the step of testing this module.
Figure 7 is a side elevation cutaway of a module according to an alternative variant of the first embodiment of the invention.
Figure 8 illustrates the step of testing the module of Figure 7.

### DETAILED DESCRIPTION OF PREFERRED EMBODIMENTS OF THE INVENTION

Generally referring to the drawings, the double-sided module includes a dielectric, flexible layer 10 supporting a chip 12 on its backside 14. The opposed side of the dielectric layer 10 is the frontside 16 which is backed by a conductive layer 18 patterned as a leadframe or metallic grid defining a series of contact pads 20.

In an intermediate condition during manufacturing, the chip module is formed on a continuous, flexible band from which modules are later individualised by punching them, then each module is embedded into a plastic body for forming an end-product chip card.

In the Figures, the module is shown in this intermediate condition, viz. before being punched out from the continuous band. Dashed line frame 22 indicates the outer shape of the module after punching, which means that the module in its final condition (i.e. once individualised and ready to be embedded in the chip body) will be comprised only of elements located within frame 22, whereas elements located outside this frame will remain on the so-called "skeleton" of the band, which will be discarded.

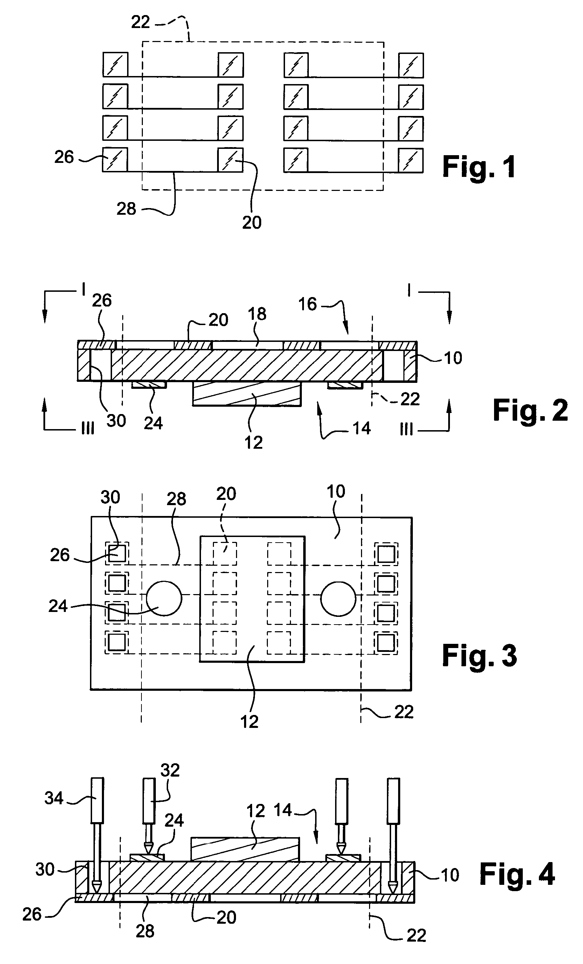

Figures 1 to 4 illustrate a first embodiment of the invention, which is designed to enable full electrical testing of the module from the backside thereof.

In this embodiment, the module is provided with additional pads 26 connected to contacts pads 20 by way of conductive strips 28. Conductive pads 26 are located outside frame 22. These pads 26 will be used only for electrical testing purposes (they will be thereafter referred to as "test pads"). They are present of the module in the intermediate condition thereof, however they will not be present on the module in its final condition (viz. the condition in which it is ready to be embedded in the card body), since they are located in the part of the module which will be discarded after punching out the individual modules from the continuous band. For instance, in the case of a chip card provided with eight contacts 20 according to ISO 7816-2 standard, there will be provided eight test pads 26 each connected to a respective contact 20 of the module.

The module also includes additional connection pads 24 located on backside 14, e.g. pads for connection to a built-in antenna for wireless communication, which connection pads 24 are used only for testing purposes; since they are located on the backside they will not be apparent to the user of the chip card as an end-product.

Dielectric layer 10 also comprises via holes 30 formed through the whole thickness of the dielectric layer at respective locations corresponding to every test pad 26, so that the inner surface of the metallization forming pads 26, namely the surface of the metallization which is normally in contact with the surface of dielectric layer 10, may be accessed from the backside 14, through via hole 30.

This is illustrated in Figure 4, which shows test probes 32 and 34 used in the course of the electrical testing step. All test probes are simultaneously applied onto backside 14 of the module. Probes 32 are directly contacted to connection pads 34 on the backside of the module, whereas probes 34 are indirectly contacted to contacts 20 by way of test pads 26 accessed from their inner side by probe 34 through respective via hole 30.

This enables full electrical testing from the backside of the module by means of probes all applied at the same time on this side.

Further, since there is no physical contact of probes 34 with electrical contacts 20 there will be no surface alteration of the latter, such as scratches or other marks resulting from the mechanical strain applied by the tip of the probe.

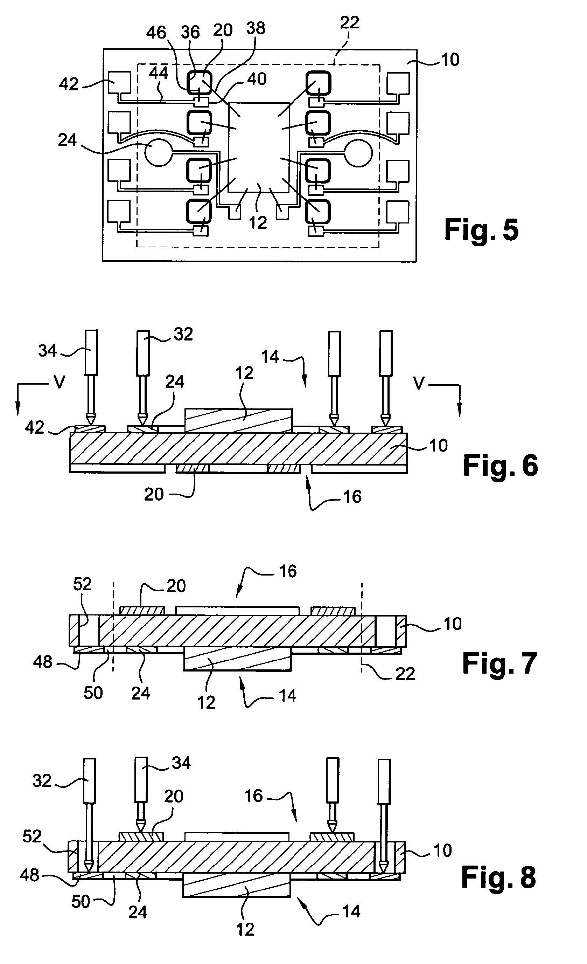

Figures 5 and 6 illustrate a second embodiment of the invention, in which electrical testing is, as previously, made from the backside of the module, however without provision of specific via holes for accessing the additional test pads.

In this embodiment, connection of the test pads to contacts 20 located on the opposed side is obtained by a modification of the wire bonding step, namely the step by which connecting wires 38 are bonded to the inside of the conductive layer in the area of contacts 20 through via holes 36, then to corresponding terminals of chip 12 (conventional so-called "wire bonding" or "die bonding" techniques).

As shown in Figure 5, the backside 14 of the module according to this embodiment of the invention is provided with additional pads 40 located close to via holes 36 and connected to contact pads 42 by way of a conductive strip 44. Test pads 42 are provided on the backside of the module, namely on the same side as connection pads 24, instead of being provided on the frontside as in the previous embodiment.

During the wire-bonding step, not only connections 38 between the terminals of chip 12 and the inner surface of contacts 20 are made, but also between the inner surface of contact 20 and additional pad 40, by means of an additional connecting wire 46.

Thanks to this arrangement test pads 42, located on the backside of the module outside frame 22 defining the outer shape of the module after punching, are electrically connected to respective contacts 20 by way of conductive strips 44, additional pads 40 and connecting wires 46 through via holes 36.

As shown of Figure 6, this enables simultaneous application of all test probes 32 and 34 onto backside 14 of the module, hence with no need to flip over the module for testing it, and with no mechanical contact of probes 34 with contacts 20 which will remain visible to the user of the card.

Figures 7 and 8 illustrate an alternative variant of the above-described first embodiment of the invention, which substantially corresponds to the one illustrated in Figures 1 to 4, however designed for enabling electrical testing from the frontside of the module instead of the backside.

In this variant test pads 48, located on backside 14 outside frame 22, are connected to connection pads 24 by means of conductive strips 50. Access to the inner surface of test pads 48 is obtained through via holes 52 which are formed in dielectric layer 10 at respective locations corresponding to the position of test pads 48.

As shown in Figure 8, frontside contacts 20 are directly accessed by probes 34, whereas backside connection pads 24 are indirectly accessed by probes 32 by way of conductive strips 50 and test pads 48 accessible at the bottom of holes 52.

Thanks to the provision of holes 52 outside punch-out frame 22, holes 52 remain on the part of the dielectric layer 10 which will be further discarded so they will accordingly not appear on the module in its final condition before embedding it in the card body.

## Claims

1. A chip card module in an intermediate condition, comprising:
- a double-sided dielectric layer (10) with a frontside (16) and a backside (14), said dielectric layer having conductive patterns formed on both sides,
- a chip (12) supported on the backside (14) of said dielectric layer,
- first contact pads (20) arranged on the frontside (16) of said dielectric layer, and
- second contact pads (24) arranged on the backside (14) of said dielectric layer,
said chip (12), first contact pads (20) and second contact pads (24) being located within a module peripheral cutout line (22) adapted to define the outer shape of the module in a further manufacturing condition after punching the dielectric layer along said cutout line,
wherein said chip card module is **characterised by** further including:
- a plurality of via holes (30) formed through the dielectric layer at respective hole locations arranged beyond said peripheral cutout line, and
- a corresponding plurality of test pads (26) each formed on the frontside (16) of the dielectric layer so as to extend over a respective via hole and connected to a respective first contact pad (20) by an electrical link (28),
whereby simultaneous electrical access is provided from the backside (14), in particular for test probes (32, 34), both i) directly to the second contact pads (24) and ii) indirectly to the first contact pads (20) by way of the test pads (26) being accessed at the bottom of the via holes (30).

2. A chip card module in an intermediate condition, comprising:
- a double-sided dielectric layer (10) with a frontside (16) and a backside (14), said dielectric layer having conductive patterns formed on both sides,
- a chip (12) supported on the backside (14) of said dielectric layer,
- first contact pads (20) arranged on the frontside (16) of said dielectric layer, and
- second contact pads (24) arranged on the backside (14) of said dielectric layer,
said chip (12), first contact pads (20) and second contact pads (24) being located within a module peripheral cutout line (22) adapted to define the outer shape of the module in a further manufacturing condition after punching the dielectric layer along said cutout line,
wherein said chip card module is **characterised by** further including:
- a plurality of via holes (52) formed through the dielectric layer at respective hole locations arranged beyond said peripheral cutout line, and
- a corresponding plurality of test pads (48) each formed on the backside (14) of the dielectric layer so as to extend over a respective via hole and connected to a respective second contact pad (24) by an electrical link,
whereby simultaneous electrical access is provided from the frontside (16), in particular for test probes (32, 34), both i) directly to the first contact pads (20) and ii) indirectly to the second contact pads (24) by way of the test pads (48) being accessed at the bottom of the via holes (52).

3. A chip card module in an intermediate condition, comprising:
- a double-sided dielectric layer (10) with a frontside (16) and a backside (14), said dielectric layer having conductive patterns formed on both sides,
- a chip (12) supported on the backside (14) of said dielectric layer,
- first contact pads (20) arranged on the frontside (16) of said dielectric layer,
- second contact pads (24) arranged on the backside (14) of said dielectric layer, and
- a plurality of bonding holes (36) formed at the periphery of the chip and receiving a wire-bond electrical connection (38) from the first contact pads (20) to respective terminals of the chip,
said chip (12), first contact pads (20), second contact pads (24) and bonding holes (36) being located within a module peripheral cutout line (22) adapted to define the outer shape of the module in a further manufacturing condition after punching the dielectric layer along said cutout line,
wherein said chip card module is **characterised by** further including:
- a plurality of test pads (42) each formed on the backside (14) of the dielectric layer,
- a corresponding plurality of intermediate pads (40) each formed on the backside (14) of the dielectric layer and connected, on the one hand, to a respective test pad (42) by an electrical link (44), and, on the other hand, to a respective first contact pad (20) by way of an additional wire-bond electrical connection (46) received by the respective bonding hole (36),
whereby simultaneous electrical access is provided from the backside (14), in particular for test probes (32, 34), both i) directly to the second contact pads (24) and ii) indirectly to the first contact pads (20) by way of the test pads (42).
